Europäisches Patentamt

European Patent Office

Office européen des brevets

(19)

(11) Publication number: 0 080 764
A1

# (12) EUROPEAN PATENT APPLICATION

(21) Application number: 82201477.5

(22) Date of filing: 20.11.82

(51) Int. Cl.³: F 02 G 5/00
A 01 G 9/24

(30) Priority: 27.11.81 NL 8105368

(43) Date of publication of application:
08.06.83 Bulletin 83/23

(84) Designated Contracting States:
AT BE CH DE FR GB IT LI LU NL SE

(71) Applicant: Schulte & Lestraden B.V.
Parklaan 156
NL-2171 EK Sassenheim(NL)

(72) Inventor: Lestraden, Jacobus Wilhelmus
Nachtegaallaan 4
NL-2172 JR Sassenheim(NL)

(74) Representative: Noz, Franciscus Xaverius, Ir. et al,
Boschdijk 155 P.O. Box 645
NL-5600 AP Eindhoven(NL)

(54) Energy producing and utilising system.

(57) The invention relates to an energy producing and utilising system in plant cultivation in which for producing energy a combustion engine and a dynamo driven by the combustion engine are used, whilst the heat extracted from the exhaust gases and/or the cooling water is utilised for heating purposes, whereby at least part of the electric energy produced is used for illuminating one or more insulated buildings in which plants are cultivated with the aid of artificial light, whilst the buildings are maintained at a given, desired temperature with the aid of at least one cooling system and the heat conducted away from the buildings with the aid of the cooling system is also utilised for heating purposes.

FIG.1.

-1-

Energy producing and utilising system.

The invention relates to a system of producing and utilising energy in cultivating plants, in which the energy is produced by a combustion engine, which drives a dynamo, whilst the heat extracted from the exhaust gases and the cooling water is utilised for heating purposes.

Such a system is known from Dutch Patent Specification 61399.

The heat extracted from the exhaust gases and/or the motor is used for heating greenhouses, whilst the electric energy produced can be used at least partly for illuminating said greenhouses.

For greenhouse cultivation it is desired to make optimum use of daylight so that there is a tendency to provide greenhouses with the largest possible glass surface in order to ensure optimum illumination of the plants. However, this automatically brings about high loss of heat near the walls of the greenhouse so that the efficiency of this known system of producing and utilising energy is very low.

According to the invention at least part of the electric energy produced is used for illuminating one or more isolated buildings in which plants are cultivated with the aid of artificial light, whilst the buildings are maintained at a given, desired temperature with the aid of at least one cooling system and the heat conducted away from the buildings with the aid of the cooling system is also used for heating purposes.

In practice it has been found that many plants can be excellently cultivated exlusively with the aid of artificial light. Therefore such cultivation can take place in rooms that can be satisfactorily shut and insulated in order to maintain optimum conditions for the culture. The light sources of the artificial light are found to produce such an amount of heat that in many cases cooling of the room is necessary and in accordance with the invention also this heat as well as the heat extracted from the exhaust gases and/or the cooling water of the combustion engine is utilised for heating purposes, for example, for heating conventional hothouses in which products are cultivated which are less suitable for cultivation by artificial light in closed rooms. In this way the system embodying the invention permits of utilising to the optimum the energy produced by the combustion engine.

It is noted that from British Patent Specification 583,721 a system is known in which a steam producing plant is employed for heating hothouses.

The steam produced is partly used for heating purposes and partly for driving a steam engine with which a dynamo is coupled. This dynamo produces electric energy which is used for further heating members. The system known from British Patent Specification 583,721 involves the same disadvantages as described above with respect to the system known from Dutch Patent Specification 61,399.

The invention will be described more fully hereinafter with reference to a few embodiments of systems in accordance with the invention illustrated in the accompanying Figures.

Fig. 1 schematically shows a first embodiment of a system in accordance with the invention.

Fig. 2 schematically shows a second embodiment of a system in accordance with the invention.

Fig. 3 schematically shows a third embodiment of a system in accordance with the invention.

Fig. 4 schematically shows a fourth embodiment of a system in accordance with the invention.

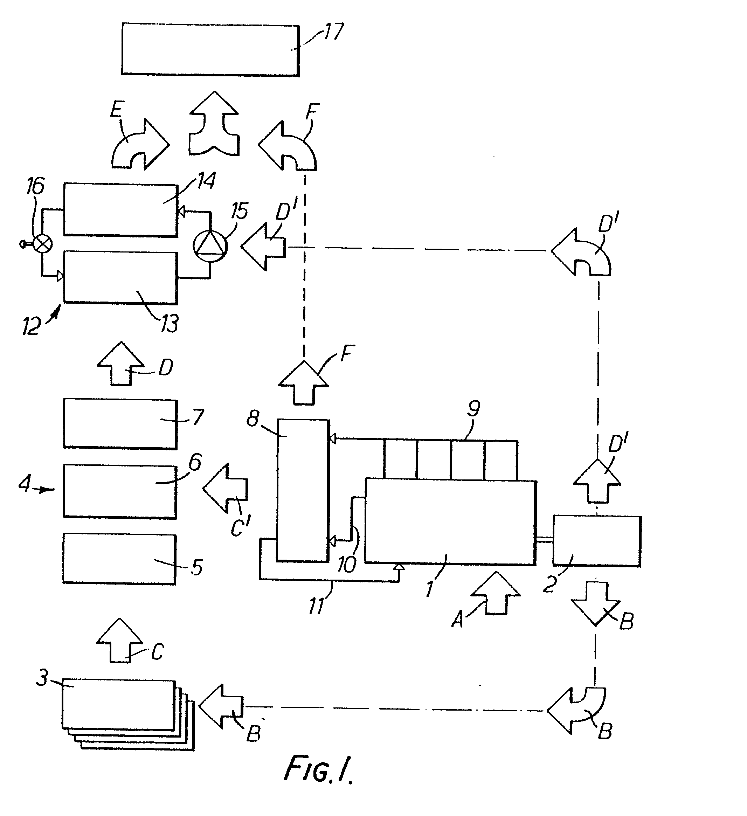

The system shown in Fig. 1 comprises a combustion engine 1, which may be formed by a gas engine, a Diesel engine or the like, to which energy in the form of gaseous or liquid fuel is supplied as indicated by the arrow A. With the aid of the engine 1 a dynamo 2 is driven for producing electric energy.

The system furthermore comprises one or more insulated cells 3, which are preferably used for cultivating plants in applying the present invention, said plants being illuminated by lamps. As indicated by the arrows B part of the electric energy produced by the dynamo 2 is fed to the lamps installed in the cells 3.

The electric energy supplied to these lamps is converted at least substantially completely into heat liberated in the insulated cells 3. In order to maintain the desired value of the temperature in the cells, an absorption cooling machine 4 of known type is connected with the cells 3, said machine comprising, as is known, an evaporator 5, a desorber 6 and a condenser 7. To the absorption cooling machine is furthermore supplied heat originating from a heat exchanger 8, to which are supplied on the one hand the exhaust gases of the engine 1 through ducts 9 and on the other hand the cooling water of the engine through a duct 10, whilst the cooling water is fed back through a duct 11 after cooling from the heat exchanger 8 to the engine. The heat extracted from the cells 3 with the aid of the absorption cooling machine (arrow C) together with the heat obtained from the heat exchanger 8 (arrow C') is transferred via the absorption cooling machine to a fluid which is brought with the aid of the absorption cooling machine to a higher temperature than that of the air contained in the cells 3. With the aid of a conventional absorption cooling machine the temperature of said fluid can, in general, raised by not more than 20 to 30° as compared with the temperature of the fluid supplied to the absorption cooling machine for cooling purposes, that is to say, in the present example the temperature of the air in the cells 3. In accordance with the invention the fluid heated with the aid of the absorption cooling machine as indicated by the arrow D is fed to a heat pump 12 of known type comprising an evaporator 13, a condenser 14, a compressor 15 arranged between evaporator and condenser and a choking member 16 arranged between condenser and evaporator. The compressor 15 is driven by part of the electric energy produced by the dynamo 2 (arrow D'). With the aid of this heat pump the temperature of the fluid can be raised by extracting heat from the fluid heated with the aid of the absorption cooling machine 4. As a result, with the aid of the heat pump the temperature can be raised to a higher temperature level so that the fluid heated by means of the heat pump may have a temperature

of 60 to 80°. This fluid, as indicated by the arrow E, can be utilised together with fluid having the same temperature level and emanating from the heat exchanger 8, indicated by the arrows F, for heating one or more buildings 17. Although in principle, building 17 may be formed by any structure to be heated, a particularly effective combination is obtained, if the cells 3 are used for cultivating plants or the like, when the building 17 is formed by hothouses for cultivating plants or the like. In this case, for example, in accordance with the stage of growth of the plants the plants may be cultivated in the cells 3 for a given time and be subsequently transferred to the hothouses 17 for further growth.

In one embodiment about one third of the energy supplied to the engine 1 in the form of fuel was converted into electric energy, which was used on the one hand for illuminating the cells and on the other hand for driving the compressor 15. The electric energy fed to the cells was converted at least substantially completely into heat, which was at least substantially fully utilised through the cooling machine and the pump for heating the buildings. Furthermore through the heat exchanger more than half of the energy fed to the engine via the fuel was absorbed in the form of heat and partly used through the absorption cooling machine and the heat pump, as indicated by the arrow C' and partly directly as indicated by the arrows F for heating purposes. The overall efficiency of the system thus attained about 92%.

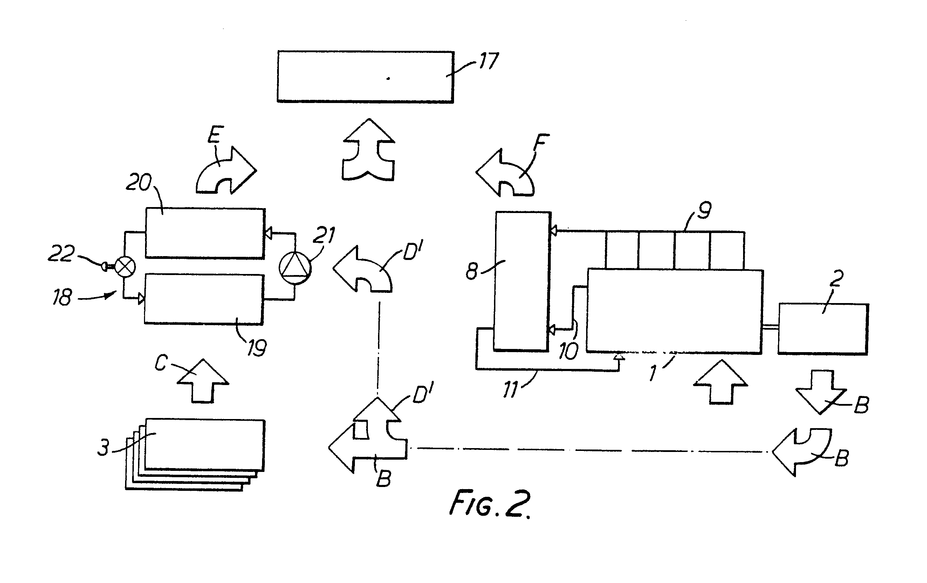

As a matter of cource, variations of the above-described system embodying the invention are conceivable. The system shown in Fig. 2 corresponds at least mainly with the system shown in Fig. 1 and corresponding parts are designated in Fig. 2 by the same reference numerals as in Fig. 1.

In the embodiment illustrated in Fig. 2, however, the absorption cooling machine 4 and the heat pump 12 are replaced by a so-called heat machine 18, which also comprises an evaporator 18, a condenser 20, a compressor 21 arranged between evaporator and condenser and a choking member 22 arranged between condenser and evaporator, but which has a design such that the fluid heated in the heat machine and leaving the same as indicated by the arrow E has a temperature which may be about 60° higher than the temperature of the fluid which has to be cooled with the aid of the heat machine and which is fed from the cells 3 to the heat machine as indicated by the arrow C. The further mode of operation of the system shown in Fig. 2 is identical to the mode of operation of the system described above with reference to Fig. 1.

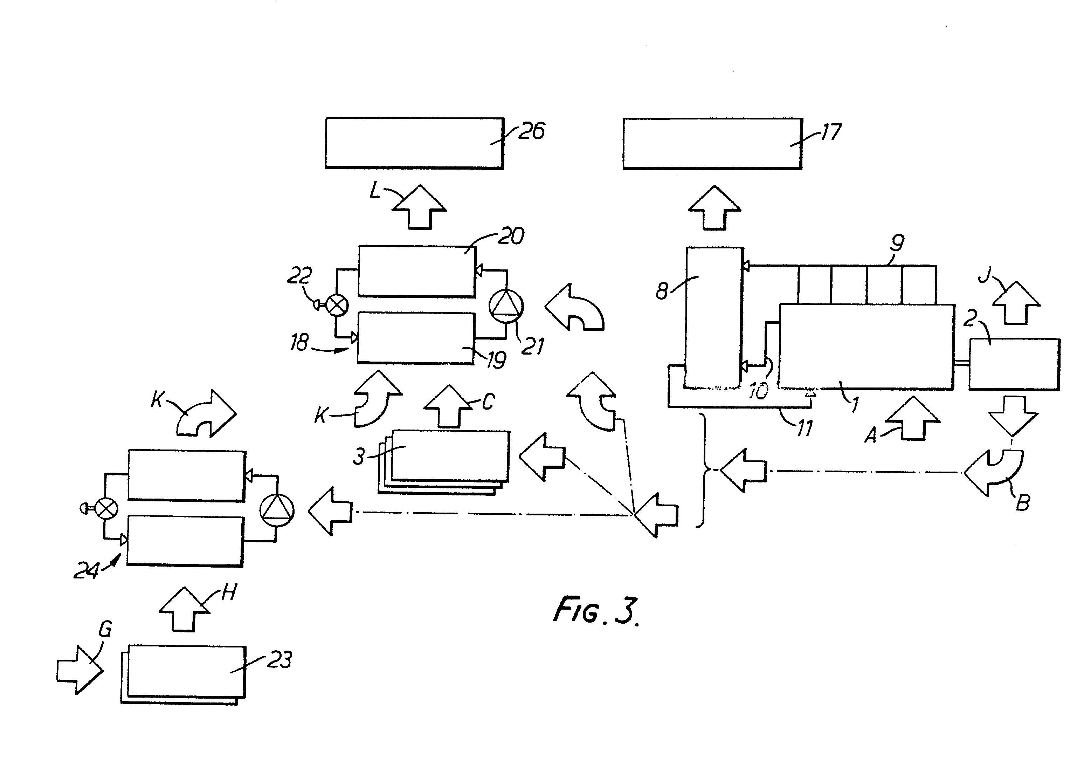

The system shown in Fig. 3 corresponds at least largely with the system of Fig. 2 and the parts corresponding with those of Fig. 2 are designated by the same reference numerals.

The system shown in Fig. 3 comprises, however, in addition one or more cooling cells 23, in which goods are cooled and stored at temperatures of 0° or lower. At given instants, when new products are introduced and as a result of the heat stream for the outer wall to the inner wall of the cooling cell a given amount of heat will be supplied as indicated by the arrow G.

In order to cool the cooling cell to the desired low temperature or, respectively, to maintain this low temperature despite the introduction of said heat a cooling machine 24 corresponding, for example, with the cooling machine 12, is connected with the cooling cell for extracting heat from the cooling cell(s) as indicated by the arrow H. The low temperature energy thus extracted from the cooling cells is conducted away, in a similar manner as described above, from the cooling machine 24 with the aid of a fluid in the form of higher temperature energy as indicated by the arrow K. The fluid of higher temperature leaving the cooling machine 24 is again fed as indicated by the arrows K to a heat pump or a heat machine 18, to which is also fed the energy emanating from the cells 3 as indicated by the arrow C. As described above, a further fluid can be heated in this heat pump at a higher temperature so that with the aid of a fluid the energy fed to the heat pump or to the machine can be delivered at a comparatively high temperature as indicated by the arrow L. As is furthermore illustrated in Fig. 3, this energy need not be definitely used in conjunction with the energy emanating from the heat exchanger 8 for heating buildings; this energy may, as an alternative, be used for a soil heating system 26. In such a case the temperature of the fluid fed to the soil heating system 26 need usually not be as high as the temperature of the fluid used for direct heating of buildings. In the embodiment shown in Fig. 3 the energy emanating from the heat exchanger 8 is again used for heating buildings, but it will be obvious that this energy may be utilised for a soil heating system or a different heating system or the like, as well as part of the stream as indicated by the arrow J.

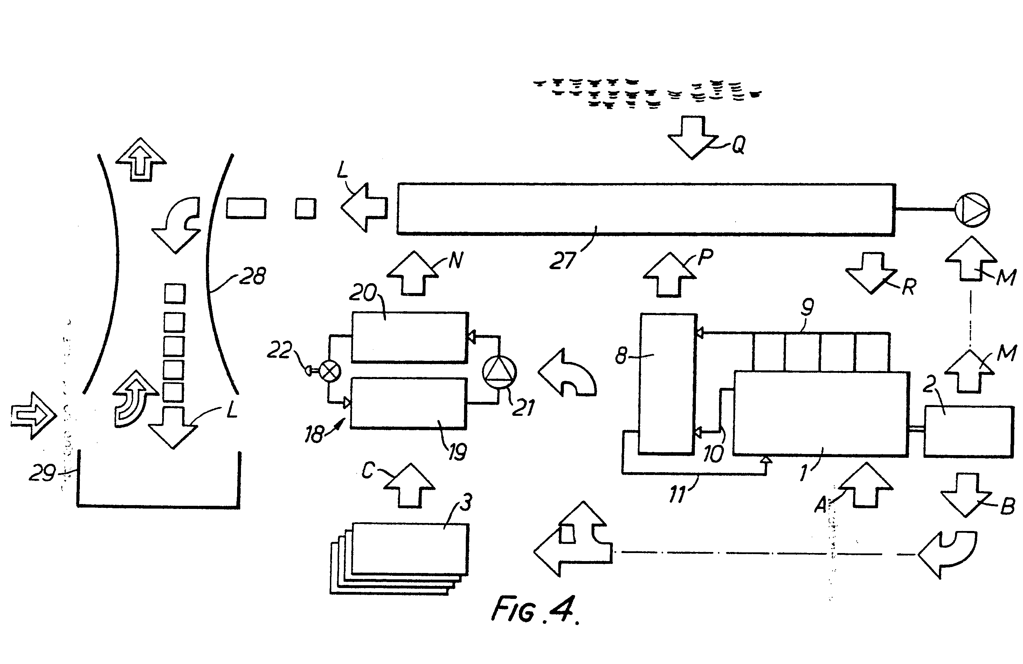

Fig. 4 shows a system corresponding partly to the design of the system of Fig. 2. Parts corresponding with the parts shown in Fig.2 are, therefore, designated by the same reference numerals. This Figure shows, however, that the system comprises a vacuum evaporator 27 for the actuation of which part of the electric energy produced by the dynamo is utilised as is indicated by the arrows M. To this vacuum evaporator 27 are furthermore fed the energy emanating from the heat machine 18 and the energy emanating from the heat exchanger 8, as indicated by the arrows N and P. To the evaporator is furthermore supplied sea water as indicated by the arrow Q. Salt is separated out in the evaporator as indicated by the arrow R and fresh water can be supplied, as indicated by the arrows L, to a cooling tower 28 for storage in a reservoir 29.

It will be obvious that within the spirit and scope of the invention variations and/or additions of the systems described above are conceivable whilst maintaining optimum utilisation of the energy fed to the combustion engine associated with the system. Where in this Application reference is made to cooling water, this term is to be understood to include also cooling air in the event an air-cooled engine is used.

It will be clear that the system of cooling the cultivation rooms and utilising the energy extracted from the cultivation rooms can be applied too if one uses current from the public electricity works.

The figures used in the claims are only meant to explain more clearly the intention of the invention and are not supposed to be any restriction concerning the interpretation of the invention.

-1-

CLAIMS:

1.       An energy producing and utilising system in plant cultivation in which for producing energy a combustion engine and a dynamo driven by the combustion engine are used, whilst the heat extracted from the exhaustgases and/or the cooling water is utilised for heating purposes, characterized in that at least part of the electric energy produced is used for illuminating one  or more insulated buildings in which plants are cultivated with the aid of  artificial light, whilst the buildings are maintained at a given, desired temperature with the aid of at least one cooling system and the heat conducted away from the buildings with the aid of the cooling system is also utilised for heating purposes.

2.       A system as claimed in Claim 1 characterized in that the heat conducted away from the buildings and/or the heat extracted from the exhaus gases and/or the cooling water of the engine are utilised for heating hothouses or the like.

3.       A system as claimed in anyone of the preceding Claims 1 or 2 characterized in that the system comprises a cooling cell which is maintained at the desired temperature with the aid of à cooling machine which gives off its heat to the cooling systems with the aid of which the insulated building(s) is (are) maintained at the desired temperature.

4.       A system as claimed in anyone of the preceding Claims characterized in that part of the electric energy generated  by the dynamo is utilised for driving the cooling system.

5.        A system as claimed in anyone of the preceding Claims characterized in that the cooling system comprises an absorption cooling machine to which is fed the heat extracted from the exhaust gases and/or the cooling water.

6.        A system as claimed in anyone of the preceding Claims characterized in that at least part of the heat conducted away from the buildings and/or the heat extracted from the exhaust gases and/or the cooling water of the engine are used for heating soil.

7.        A system as claimed in anyone of the preceding Claims characterized in that at least part of the heat conducted away from the buildings and/or the heat extracted from the exhaust gases and/or the cooling water of the engine are used for heating an evaporating system.

8.        Method for cultivating plants in closed rooms, wherein the plants are cultivated by using artificial light sources, characterized in, that the rooms are maintained at a desired temperature with the aid of at least one cooling device and the heat extracted from the room is utilised for heating purposes.

0080764

Fig. I.

FIG.2.

0080764

Fig. 3.

Fig. 4.

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| | --- | | F 02 G 5/00 |
| X | NL-C- 61 399 (PHILIPS) *Page 1, line 1 to page 2, line 51* | 1-3,7 | A 01 G 9/24 |
| | --- | | |
| X | GB-A- 583 721 (DOREY) *Page 1, lines 1-77* | 1-3 | |
| | --- | | |
| A | DE-A-2 913 528 (SEP) *Page 1, paragraphs 1,2; page 2, paragraphs 1-4* | 1,4,6, 8 | |
| | --- | | |
| A | DE-A-2 644 322 (MAN) *Page 1, paragraphs 1-3; page 2, paragraphs 1,2* | 1,5,6, 8 | |
| | --- | | **TECHNICAL FIELDS SEARCHED (Int. Cl. 3)** |
| A | DE-A-2 854 937 (DAIMLER BENZ) *Claim 1* | 1,6 | F 02 G A 01 G F 25 B |
| | ----- | | |

The present search report has been drawn up for all claims

| Place of search | Date of completion of the search | Examiner |
|---|---|---|
| THE HAGUE | 24-02-1983 | WASSENAAR G. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82